(19)

Europäisches Patentamt
European Patent Office
Office européen des brevets

(11)　EP 4 270 751 A1

(12)　**EUROPEAN PATENT APPLICATION**
published in accordance with Art. 153(4) EPC

(43) Date of publication:
　01.11.2023　Bulletin 2023/44

(51) International Patent Classification (IPC):
　$H02M\ 1/42^{(2007.01)}$　　$H02M\ 3/155^{(2006.01)}$

(21) Application number: 22819139.1

(52) Cooperative Patent Classification (CPC):
　H02M 1/14; H02M 1/42; H02M 3/155; H02M 3/156;
　H05B 45/36; H05B 45/375; Y02B 70/10

(22) Date of filing: 21.03.2022

(86) International application number:
　PCT/CN2022/081954

(87) International publication number:
　WO 2022/257534 (15.12.2022 Gazette 2022/50)

(84) Designated Contracting States:
　**AL AT BE BG CH CY CZ DE DK EE ES FI FR GB
　GR HR HU IE IS IT LI LT LU LV MC MK MT NL NO
　PL PT RO RS SE SI SK SM TR**
　Designated Extension States:
　**BA ME**
　Designated Validation States:
　**KH MA MD TN**

(72) Inventors:
　• LIU, Chaorui
　　Chongqing 401331 (CN)
　• XIA, Yulong
　　Chongqing 401331 (CN)
　• HE, Qiangzhi
　　Chongqing 401331 (CN)
　• ZHANG, Yun
　　Chongqing 401331 (CN)

(30) Priority:　10.06.2021　CN 202110645429

(74) Representative: **Canzler & Bergmeier
　Patentanwälte
　Partnerschaft mbB
　Despag-Straße 6
　85055 Ingolstadt (DE)**

(71) Applicant: CHINA RESOURCES
　MICROELECTRONICS
　(CHONGQING) CO., LTD
　**Sha Ping Ba District
　Chongqing 401331 (CN)**

(54)　**LED DRIVING POWER SUPPLY, POWER SUPPLY CIRCUIT, AND POWER SUPPLY METHOD**

(57)　The present invention provides an LED driving power supply, a power supply circuit, and a power supply method. The power supply circuit comprises: a rectifier module, which rectifies an alternating current voltage to obtain an input voltage. A first diode and a second diode are connected in series in the same direction, and then connected in parallel to an output end of the rectifier module. A first end of a first inductor is connected to a cathode of the first diode, and a second end is connected to a first end of a main switch. A freewheeling module is connected in parallel to two ends of the first inductor. A lower plate of a first capacitor is connected to an anode of the first diode, and an upper plate is connected to the second end of the first inductor. A first end of the second inductor is connected to a second end of the main switch, and a second end is connected to an inverting output end of the rectifier module via a second capacitor. A cathode of a third diode is connected to the first end of the second inductor, and an anode is connected to the inverting output end of the rectifier module. The present invention has two switches, that is there are two control degrees of freedom, which facilitates the optimization of control pa-

rameter design; and the present invention has a fast load dynamic response speed and small output current ripple.

Fig. 1

# Description

## CROSS REFERENCE TO RELATED APPLICATIONS

The present application claims the benefit of priority to Chinese Patent Application No. CN 202110645429.6, entitled "LED DRIVING POWER SUPPLY, POWER SUPPLY CIRCUIT, AND POWER SUPPLY METHOD", filed with CNIPA on June 10, 2021, the contents of which are incorporated herein by reference in its entirety.

## TECHNICAL FIELD

The present disclosure relates to the field of power electronics design, in particular, to an LED driving power supply, a power supply circuit, and a power supply method.

## BACKGROUND

Traditional power electronic devices with bridge uncontrolled rectifier filtering circuits connected to the power grid have a large phase difference between the input current and the input voltage, a high harmonic content, and a low power factor, which will cause harmonic pollution to the power grid, leading to resonance in the power grid and interfering with the normal operation of electrical devices. In fact, the large amount of current harmonics generated by power electronic devices has become one of the main sources of harmonics in the power grid. In order to reduce the harmonic component of the input current of the switching converter, it is necessary to use Power Factor Correction (PFC) technology to meet harmonic standards such as IEC61000-3-2 and reduce pollution to the power grid. However, there are still the following problems.

Firstly, the output ripple of a single-stage PFC converter is large, which affects the output characteristics of the system; secondly, in applications where the load changes frequently and rapidly, slow load dynamic response will cause large fluctuations in the output DC bus voltage for a long time, which will not only reduce the system control performance but also cause oscillation of the under-voltage protection function.

Therefore, how to obtain a power supply circuit with fast dynamic response and low output current ripple has become one of the urgent problems to be solved by those skilled in the art.

## SUMMARY

In view of the shortcomings of the traditional technology described above, the purpose of the present disclosure is to provide an LED driving power supply, a power supply circuit, and a power supply method to solve the problems of slow dynamic response and large output current ripple in PFC converters in existing technology.

To achieve the above and other related purposes, the present disclosure provides a power supply circuit that includes at least:
A rectifier module, a first diode, a second diode, a first inductor, a first capacitor, a freewheeling module, a main switch, a third diode, a second inductor, and a second capacitor.

The rectifier module is configured to receive an AC voltage and rectify the AC voltage to obtain a DC input voltage.

A cathode of the first diode is connected to a non-inverting output end of the rectifier module, and an anode of the first diode is connected to a cathode of the second diode. An anode of the second diode is connected to an inverting output end of the rectifier module.

A first end of the first inductor is connected to the cathode of the first diode, and a second end of the first inductor is connected to a first end of the main switch.

An input end of the freewheeling module is connected to the second end of the first inductor, and an output end of the freewheeling module is connected to the first end of the first inductor.

A lower electrode plate of the first capacitor is connected to the anode of the first diode, and an upper electrode plate of the first capacitor is connected to the second end of the first inductor.

A first end of the second inductor is connected to a second end of the main switch, and a second end of the second inductor is connected to the inverting output end of the rectifier module via the second capacitor.

A cathode of the third diode is connected to the first end of the second inductor, and an anode of the third diode is connected to the inverting output end of the rectifier module.

Optionally, the freewheeling module includes a freewheeling switch and a fourth diode, where the freewheeling switch is connected in series with the fourth diode.

Optionally, the power supply circuit further includes a main switch control module. The main switch control module includes an operational amplifier and a first comparator; the operational amplifier is configured to amplify and output a difference between an output current of the power supply circuit and a first reference current, and the first comparator is configured to compare an output signal of the operational amplifier with a carrier signal and generate a main switch control signal.

An inverting input end of the operational amplifier is configured to receive the output current of the power supply circuit, a non-inverting input end of the operational amplifier is configured to receive the first reference current, a non-inverting input end of the first comparator is connected to an output end of the operational amplifier, and a inverting input end of the first comparator is configured to receive the carrier signal; or the non-inverting input end of the operational amplifier is configured to receive the output current of the power supply circuit, the inverting input end of the operational amplifier is configured to receive the first reference current, the inverting input end of the first comparator is connected to the output end of the operational amplifier, and the non-inverting input end of the first comparator is configured to receive the carrier signal.

More optionally, the power supply circuit further includes a freewheeling switch control module. The freewheeling switch control module includes a second comparator and an RS flip-flop; an inverting input end of the second comparator is configured to receive a current of the first inductor, and a non-inverting input end of the second comparator is configured to receive a second reference current, the current of the first inductor is compared with the second reference current by the second comparator and a comparison result is output; a set end of the RS flip-flop is connected to an output end of the second comparator, and a reset end of the RS flip-flop is connected to a control signal of the main switch to output a freewheeling switch control signal.

More optionally, the second reference current is a sine wave in phase with the AC voltage.

To achieve the above and other related purposes, the present disclosure further provides an LED driving power supply. The LED driving power supply includes at least:

An LED load and the above power supply circuit. The LED load is connected in parallel across the second capacitor.

To achieve the above and other related purposes, the present disclosure further provides a power supply method for the above power supply circuit. The power supply method includes at least:

When an input voltage is less than or equal to a voltage across the first capacitor, turning on the main switch and turning off the freewheeling switch, where the first capacitor supplies power to the second inductor and a load; or turning off the main switch and the freewheeling switch, where the second inductor supplies power to the load.

When the input voltage is greater than the voltage across the first capacitor, turning on the main switch and turning off the freewheeling switch, where the input voltage and the first capacitor supply power to the second inductor and the load; or turning off the main switch and the freewheeling switch, where the first inductor supplies power to the first capacitor, and the second inductor supplies power to the load; or turning off the main switch and turning on the freewheeling switch, where the first inductor enters a freewheeling state, and the second inductor supplies power to the load.

To achieve the above and other related purposes, the present disclosure further provides a power supply method for the above power supply circuit. The power supply method includes at least:

When an input voltage is less than or equal to a voltage across the first capacitor, turning on the main switch and turning off the freewheeling switch, where the first capacitor supplies power to the second inductor and the load; or turning off the main switch and the freewheeling switch, where a current on the second inductor decreases and the second inductor supplies power to the load; or turning off the main switch and the freewheeling switch, where the current on the second inductor is zero, and the second capacitor supplies power to the load.

When the input voltage is greater than the voltage across the first capacitor, turning on the main switch and turning off the freewheeling switch, where the input voltage and the first capacitor supply power to the second inductor and the load; or turning off the main switch and the freewheeling switch, where the first inductor charges the first capacitor, and the second inductor supplies power to the load; or turning off the main switch and turning on the freewheeling switch, where the first inductor enters a freewheeling state, the current on the second inductor decreases, and the second inductor supplies power to the load; or turning off the main switch and turning on the freewheeling switch, where the first inductor enters a freewheeling state, the current on the second inductor is zero, and the second capacitor supplies power to the load.

More optionally, when a value of a first reference current minus an output current of the power supply circuit is greater than a value of a carrier signal, the main switch is turned on; when the value of the first reference current minus the output current of the power supply circuit is less than the value of the carrier signal, the main switch is turned off.

More optionally, the carrier signal is a sawtooth wave.

More optionally, when a current of the first inductor is less than a second reference current and the main switch is in an off state, the freewheeling switch is turned on.

More optionally, the second reference current is a sine wave in phase with an AC voltage.

As described above, the LED driving power supply, the power supply circuit and the power supply method of the present disclosure have the following beneficial effects:

1. The converter in the LED driving power supply, the power supply circuit and the power supply method of the present disclosure has two switches: a main switch and a freewheeling switch, that is, there are two control degrees of freedom, which makes it easier to optimize control parameter design.

2. The LED driving power supply, the power supply circuit and the power supply method of the present disclosure have faster load dynamic response speed and smaller output current ripple.

BRIEF DESCRIPTION OF THE DRAWINGS

Fig. 1 shows a schematic diagram of a power supply circuit according to the present disclosure.

Fig. 2 shows a schematic diagram of a main switch control module according to the present disclosure.

Fig. 3 shows a schematic diagram of a freewheeling switch control module according to the present disclosure.

Fig. 4 shows a schematic diagram of an LED driving power supply according to the present disclosure.

Figs. 5-9 show schematic diagrams of working modes of a power supply method of a power supply circuit according to the present disclosure.

Fig. 10 shows a schematic diagram of waveforms of major nodes in a power supply method according to the present disclosure.

Figs. 11-12 show schematic diagrams of working modes of a power supply method of a power supply circuit according to the present disclosure.

Fig. 13 shows a schematic diagram of waveforms of major nodes of a power supply method according to the present disclosure.

Figs. 14-19 show schematic diagrams of waveforms of AC voltage, input current and output current for six PFC converters.

Figs. 20-25 show schematic diagrams of load dynamic performance for three power supply circuits, CCM-DCM, DCM-DCM and PCCM-DCM.

Reference Numbers

**[0031]**

1       Power supply circuit

11      Rectifier module

12      Freewheeling module

13      Main switch control module

131     Operational amplifier

132     First comparator

14      Freewheeling switch control module

141     Second comparator

142     RS flip-flop

DETAILED DESCRIPTION

The embodiments of the present disclosure will be described below through exemplary embodiments. Those skilled in the art can easily understand other advantages and effects of the present disclosure according to contents disclosed by the specification. The present disclosure can also be implemented or applied through other different exemplary embodiments. Various modifications or changes can also be made to all details in the specification based on different points of view and applications without departing from the spirit of the present disclosure.

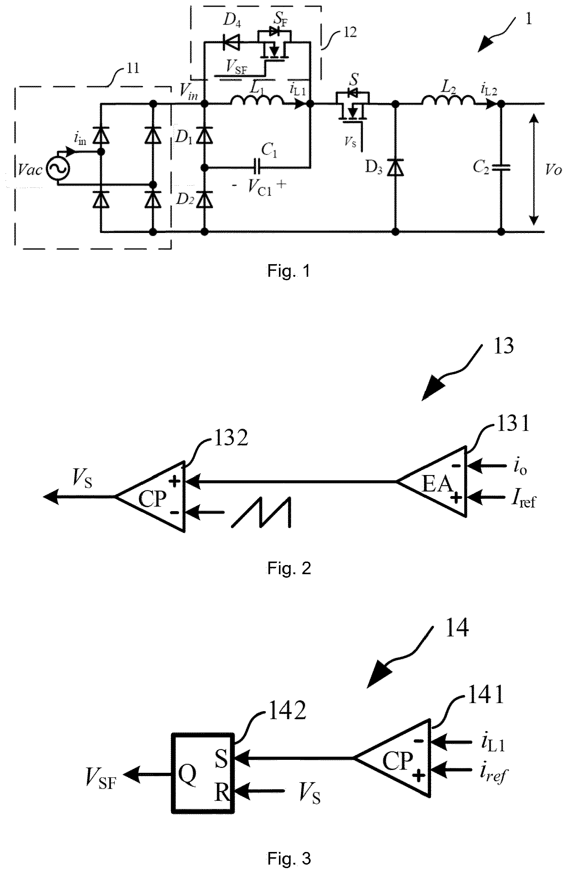

Please refer to Figs. 1-25. It needs to be stated that the drawings provided in the following embodiments are just used for schematically describing the basic concept of the present disclosure, thus illustrating components related to the present disclosure and are not drawn according to the numbers, shapes and sizes of components during actual implementation. The configuration, number and scale of each component during actual implementation thereof may be freely changed, and the component layout configuration thereof may be more complex.

Embodiment 1

As shown in Fig. 1, this embodiment provides a power supply circuit 1, which includes:
A rectifier module 11, a first diode D1, a second diode D2, a first inductor L1, a first capacitor C1, a freewheeling module 12, a main switch S, a third diode D3, a second inductor L2, and a second capacitor C2.

As shown in Fig. 1, the rectifier module 11 receives an AC voltage $V_{ac}$ and rectifies the AC voltage $V_{ac}$ to obtain a DC input voltage $V_{in}$.

Specifically, in this embodiment, the rectifier module 11 is a bridge-type uncontrolled rectification filtering circuit and includes two diode groups connected in parallel. Each diode group includes two diodes connected in series. The AC voltage $V_{ac}$ is connected between the two diodes of each diode group. The rectifier module 11 provides a DC input voltage $V_{in}$, the input voltage $V_{in}$ being the absolute value of a sinusoidal voltage signal. In actual use, any structure that can rectify an AC voltage into a DC voltage is applicable to the present disclosure and is not limited by this embodiment.

As shown in Fig. 1, the cathode of the first diode D1 is connected to the non-inverting output end of the rectifier module 11, and the anode of the first diode D1 is connected to the cathode of the second diode D2; the anode of the second diode D2 is connected to the inverting output end of the rectifier module 11.

Specifically, after the first diode D1 and the second diode D2 with the same phase are connected in series, they are connected in parallel across the output ends of the rectifier module 11, to provide a current circuit.

As shown in Fig. 1, a first end of the first inductor L1 is connected to the cathode of the first diode D1, and a second end of the first inductor L1 is connected to a first end of the main switch S.

As shown in Fig. 1, an input end of the freewheeling module 12 is connected to the second end of the first inductor L1, and an output end of the freewheeling module 12 is connected to the first end of the first inductor L1.

Specifically, in this embodiment, the freewheeling module 12 includes a freewheeling switch SF and a fourth diode D4 connected in series with each other. As an example, the freewheeling switch SF is an NMOS transistor. The drain of the freewheeling switch SF is connected to the second end of the first inductor, the source of the freewheeling switch SF is connected to the anode of the fourth diode D4, and the gate of the freewheeling switch SF receives a freewheeling switch control signal VSF. The cathode of the fourth diode D4 is connected to the first end of the first inductor L1. The position relationship between the freewheeling switch SF and the fourth diode D4 can be interchanged as long as they are connected in series. In actual use, any optional conduction freewheeling module is applicable to the present disclosure and is not limited by this embodiment.

As shown in Fig. 1, a lower electrode plate of the first capacitor C1 is connected to the anode of the first diode D1, and an upper electrode plate of the first capacitor C1 is connected to the second end of the first inductor L1.

As shown in Fig. 1, a first end of the second inductor L2 is connected to a second end of the main switch S, and a second end of the second inductor L2 is connected to the inverting output end of the rectifier module 11 via the second capacitor C2.

Specifically, in this embodiment, the main switch S is an NMOS transistor, then the drain of the main switch S is connected to the second end of the first inductor L1, the source of the main switch S is connected to the first end of the second inductor L2, and the gate of the main switch S is connected to the main switch control signal Vs; in actual use, the connection port can be adjusted according to the specific device type, which will not be repeated here.

Specifically, both ends of the second capacitor C2 are the output voltage $V_o$ of the power supply circuit 1.

As shown in Fig. 1, the cathode of the third diode D3 is connected to the first end of the second inductor L2, and the anode of the third diode D3 is connected to the inverting output end of the rectifier module 11.

As shown in Fig. 2, as another example of the present disclosure, the power supply circuit 1 further includes a main switch control module 13. In this embodiment, the main switch control module 13 includes an operational amplifier 131 and a first comparator 132. As an example, the inverting input end of the operational amplifier 131 receives the output current $i_o$ of the power supply circuit 1, and the non-inverting input end of the operational amplifier 131 receives the first reference current $I_{ref}$. The difference between the output current $i_o$ of the power supply circuit 1 and the first reference current $I_{ref}$ is amplified and output. The non-inverting input end of the first comparator 132 is connected to the output end of the operational amplifier 131, and the inverting input end of the first comparator 132 is connected to a carrier signal. The output signal of the operational amplifier 131 is compared with the carrier signal to generate a main switch control signal Vs. In this embodiment, the carrier signal is a sawtooth wave; in actual use, the waveform of the carrier can be set as needed. It should be noted that the polarity relationship between the input end of the operational amplifier 131 and the corresponding input signal can be interchanged, and in this case, the polarity relationship between the input end of the first comparator 132 and the corresponding input signal also needs to be interchanged (that is, the non-inverting input end of the operational amplifier receives the output current of the power supply circuit, and the inverting input end of the operational amplifier receives the first reference current; the inverting input end of the first comparator is connected to the output end of operational amplifier, and the non-inverting input end of the first comparator receives the carrier signal), which can also achieve control of the main switch S of the present disclosure. Furthermore, any circuit structure capable of realizing the following logic is applicable to the present disclosure, not limited to devices and connection relationships listed in this embodiment: when the value ($I_{ref}-i_o$) obtained by subtracting the output current $i_o$ from the first reference current $I_{ref}$ is greater than the value of the carrier signal, the main switch S is turned on; when the value ($I_{ref}-i_o$) obtained by subtracting the output current $i_o$ from the first reference current $I_{ref}$ is less than the value of the carrier signal, the main switch S is turned off.

As shown in Fig. 3, as another embodiment of the present disclosure, the power supply circuit 1 further includes a freewheeling switch control module 14. In this embodiment, the freewheeling switch control module 14 includes a second comparator 141 and an RS flip-flop 142. The inverting input end of the second comparator 141 receives a current $i_{L1}$ of the first inductor L1, and the non-inverting input end of the second comparator 141 receives a second reference current $i_{ref}$. The current $i_{L1}$ of the first inductor L1 is compared with the second reference current $i_{ref}$ and the comparison result is output. As an example, the second reference current $i_{ref}$ is a sine wave current that is in phase with the AC voltage $V_{ac}$. The set end of the RS flip-flop 142 is connected to the output end of the second comparator 141, and the reset end of the RS flip-flop 142 is connected to the main switch control signal Vs. The freewheeling switch control signal $V_{SF}$ is output. It should be noted that any circuit structure that can implement the following logic is applicable to the present disclosure, and is not limited to the devices and connection relationships listed in this embodiment: when the current $i_{L1}$ of the first inductor L1 is less than the second reference current $i_{ref}$ and the main switch S is turned off, the freewheeling switch SF is turned on.

It should be noted that the control logic of the main switch S and the freewheeling switch SF is not limited to the examples listed in this embodiment. Any method that can control the main switch S and freewheeling switch SF based on this power supply circuit according to needs is applicable, and this embodiment is not limited.

The present disclosure adopts a quadratic Buck PFC converter with a three-phase operating mode, which improves the load dynamic response speed and reduces the output current ripple. In addition, according to charge balance of the first capacitor C1, the following Formula 1 is obtained:

$$(I_{L2} - I_{L1})dT_S = I_{L1}(1-d)T_S \qquad \text{Formula 1}$$

Solving formula 1, and the following Formula 2 is obtained:

$$I_{L1} = dI_{L2} \qquad \text{Formula 2}$$

In the formulas, $I_{L1}$ is the average value of the inductor current $i_{L1}$ per cycle, $I_{L2}$ is the average value of the inductor current $i_{L2}$ per cycle, d is the conduction duty cycle of the main switch, Ts is the switching period of the power supply circuit. It can be seen from formula 2 that $I_{L1} < I_{L2}$. Therefore, adding a freewheeling circuit to the first inductor L1 can reduce its loss during the freewheeling process, thereby making the power supply circuit more efficient.

Embodiment 2

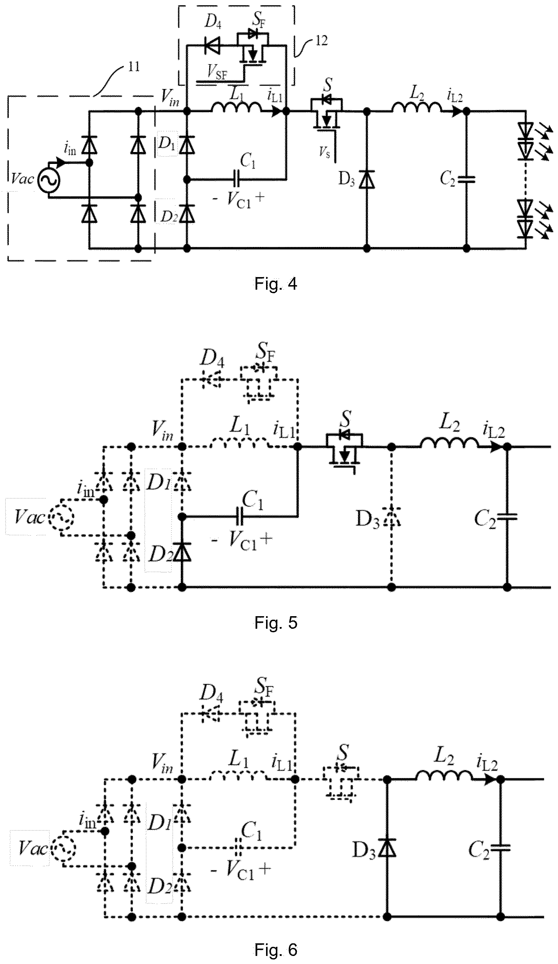

As shown in Fig. 4, this embodiment provides an LED driving power supply, which includes: an LED load and a power supply circuit 1. The power supply circuit 1 adopts the power supply circuit structure of Embodiment 1, and the specific structure is not repeated here. The LED load is connected in parallel across the second capacitor C2, and the power supply circuit 1 supplies power to the LED load.

The load dynamic response speed of the power supply circuit 1 is fast, and the output current ripple is small, which can make the LED load free of flicker.

Embodiment 3

As shown in Figs. 1 and 5-10, this embodiment provides a power supply method for a power supply circuit. The method is implemented based on the power supply circuit 1 of Embodiment 1. The first inductor L1 works in a Psuedo Continuous Conduction Mode (PCCM), and the second inductor L2 works in a Continuous Conduction Mode (CCM). The power supply method of the power supply circuit includes:

When an input voltage is less than or equal to a voltage across a first capacitor, turning on a main switch and turning off a freewheeling switch, where the first capacitor supplies power to a second inductor and a load; or turning off both the main switch and the freewheeling switch, where the second inductor supplies power to the load.

When the input voltage is greater than the voltage across the first capacitor, turning on the main switch and turning off the freewheeling switch, where the input voltage and the first capacitor supply power to the second inductor and the load; or turning off both the main switch and the freewheeling switch, where the first inductor supplies power to the first capacitor, and the second inductor supplies power to the load; or turning off the main switch and turning on the freewheeling switch, where the first inductor enters a freewheeling state, and the second inductor supplies power to the load.

Specifically, within half a power frequency cycle, the working mode of the power supply circuit is divided into two stages: stage A and stage B.

1) Stage A

When the input voltage $V_{in}$ is less than or equal to $V_{C1}$ across the first capacitor C1, the power supply circuit works in stage A. At this time, the input end and the output end of the power supply circuit are disconnected, and the freewheeling switch SF has been turned off. The power supply circuit in stage A includes two working modes: mode I and mode II.

Mode I: As shown in Fig. 5, when the main switch S is turned on, there is no current flowing through the first inductor L1, and the first diode D1 is turned off; the first capacitor C1 supplies power to the second inductor L2 and the load, the second diode D2 is turned on, the third diode D3 is turned off, and the current $i_{L2}$ of the second inductor L2 rises linearly.

Mode II: As shown in Fig. 6, when the main switch S is turned off, the third diode D3 is turned on to provide a discharge circuit for the second inductor L2, the second inductor L2 supplies power to the load, and the current $i_{L2}$ of the second inductor L2 decreases linearly.

2) Stage B

When the input voltage $V_{in}$ is greater than the voltage $V_{C1}$ across the first capacitor C1, the power supply circuit works in stage B. The power supply circuit in stage B includes three working modes: mode III, mode IV and mode V. Within one switching cycle, assuming that the AC voltage $V_{ac}$ remains unchanged:

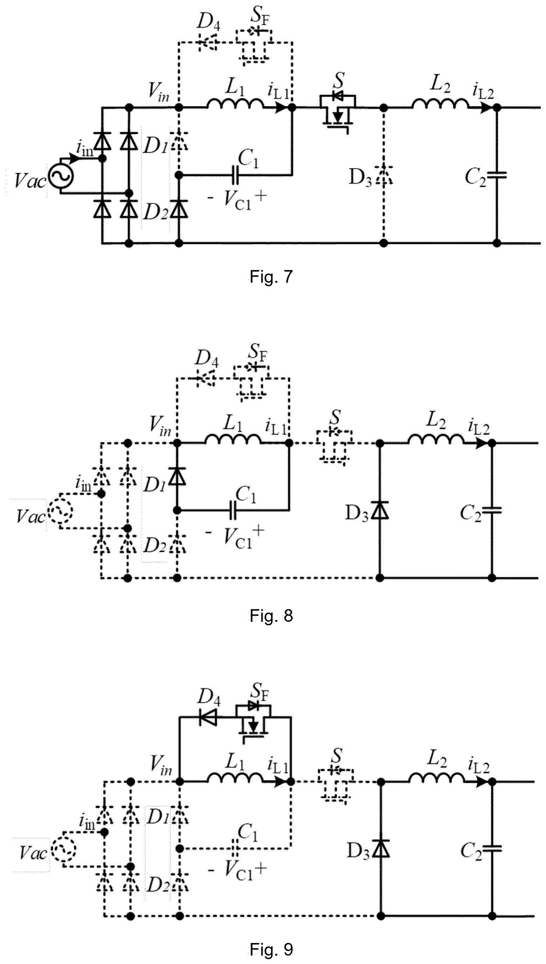

Mode III: As shown in Fig. 7, when the main switch S is turned on and the freewheeling switch SF is turned off, the input voltage $V_{in}$ and the first capacitor C1 supply power to inductors and the load, the current $i_{L1}$ on the first inductor and the current $i_{L2}$ on the second inductor L2 rise linearly, the second diode D2 is turned on, and the first diode D1 and the third diode D3 are turned off due to withstanding a reverse voltage.

Mode IV: As shown in Fig. 8, when the main switch S and the freewheeling switch SF are both turned off, the second diode D2 is turned off, the first diode D1 is turned on, providing a discharge circuit for the first inductor L1. The first inductor L1 charges the first capacitor C1, and the current $i_{L1}$ on the first inductor L1 decreases linearly. The third diode D3 is turned on, providing a discharge circuit for the second inductor L2. The second inductor L2 supplies power to the load, and the current $i_{L2}$ on the second inductor L2 decreases linearly.

Mode V: As shown in Fig. 9, when the main switch S is turned off and the freewheeling switch SF is turned on, the fourth diode D4 is turned on and the first inductor L1 enters a freewheeling state with its current $i_{L1}$ remaining unchanged. The third diode D3 is turned on, providing a discharge circuit for the second inductor L2. The second inductor L2 supplies power to the load, and the current $i_{L2}$ on the second inductor decreases linearly.

In this embodiment, the control logic of the main switch S and the freewheeling switch SF is as follows: when the value of the first reference current $I_{ref}$ minus the output current $i_o$ is greater than the value of the carrier signal, the main switch S is turned on; when the value of the first reference current $I_{ref}$ minus the output current $i_o$ is less than the value of the carrier signal, the main switch S is turned off. As an example, the carrier signal is a sawtooth wave. When the current $i_{L1}$ of the first inductor L1 is less than the second reference current $i_{ref}$ and the main switch S is in an off state, the freewheeling switch SF is turned on. As an example, the second reference current $i_{ref}$ is a sine wave in phase with the AC voltage $V_{ac}$.

Specifically, as an example, this embodiment adopts a sine current reference control strategy, uses a voltage signal to control the conduction of the main switch S, and uses an inductor current feedback signal to control the conduction of the freewheeling switch SF. As shown in Figs. 2 and 3, the output current signal $i_o$ is compared with the reference current $I_{ref}$, and the compared signal is amplified through an operational amplifier to obtain an error signal as a non-inverting input of the first comparator. The error signal is compared with an inverting input carrier to obtain a drive control signal Vs for controlling the main switch S. The reference value $i_{ref}$ for the inductor current $i_{L1}$ is a sine wave in phase with the AC voltage

$V_{ac}$. The reference value $i_{ref}$ is compared with the inductor current $i_{L1}$ by the second comparator, and the compared result is used as the input of an S terminal (set end) of an RS flip-flop. The control signal of the main switch S is used as the input of an R terminal (reset end) of the RS flip-flop. A Q terminal of the RS flip-flop outputs a drive control signal $V_{SF}$ for the freewheeling switch SF, thereby realizing a voltage outer loop and a current inner loop to control the converter.

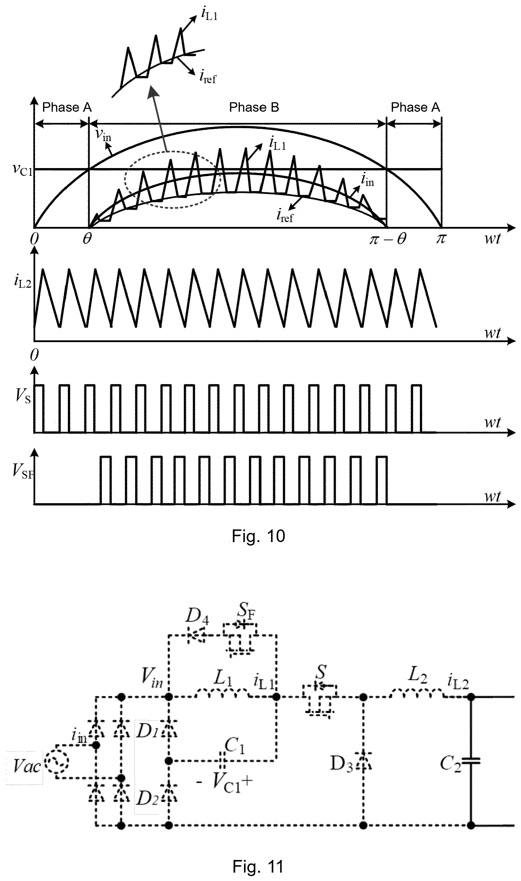

As shown in Fig. 10, waveform diagrams of major nodes in the power supply method according to this embodiment are provided. It can be seen that the first inductor L1 operates in the PCCM mode and the second inductor L2 operates in the CCM mode.

Embodiment 4

As shown in Figs. 1 and 11-13, this embodiment provides a power supply method for a power supply circuit based on the power supply circuit 1 according to Embodiment 1. In this embodiment, the first inductor L1 operates in the PCCM mode and the second inductor L2 operates in a Discontinuous Conduction mode (DCM). The power supply method for the power supply circuit includes:

When an input voltage is less than or equal to a voltage across a first capacitor, turning on a main switch and turning off a freewheeling switch, where the first capacitor supplies power to a second inductor and a load; or turning off the main switch and the freewheeling switch, where a current on the second inductor decreases and the second inductor supplies power to the load; or turning off the main switch and the freewheeling switch, where the current on the second inductor is zero, and the second capacitor supplies power to the load.

When the input voltage is greater than the voltage across the first capacitor, turning on the main switch, turning off the freewheeling switch, where the input voltage and the first capacitor supply power to the second inductor and the load; or turning off the main switch and the freewheeling switch, where the first inductor charges the first capacitor, and the second inductor supplies power to the load; or turn offing the main switch and turning on the freewheeling switch, where the first inductor enters a freewheeling state, the current on the second inductor decreases, and the second inductor supplies power to the load; or turning off the main switch and turning on the freewheeling switch, where the first inductor enters a freewheeling state, the current on the second inductor is zero, and the second capacitor supplies power to the load.

Specifically, within half a power frequency cycle, the operating mode of the power supply circuit is divided into two stages: Stage A and Stage B.

1) Stage A

When the input voltage $V_{in}$ is less than or equal to the voltage $V_{C1}$ across the first capacitor, the power supply circuit operates in Stage A. At Stage A, the power supply circuit includes three operating modes: Mode I, Mode II and Mode VI. Among them, Mode I and Mode II are the same as Modes I and II in Embodiment 3 and will not be repeated here.

Mode VI: As shown in Fig. 11, when both the main switch S and the freewheeling switch SF are turned off, the current $i_{L2}$ of the second inductor L2 drops to zero, the third diode D3 is turned off, and the second capacitor C2 supplies power to the load.

2) Stage B

When the input voltage $V_{in}$ is greater than the voltage $V_{C1}$ across the first capacitor, the power supply circuit operates in Stage B. The power supply circuit in Stage B includes four operating modes: Mode III, Mode IV, Mode V and Mode VII. Among them, Modes III, IV and V are the same as Modes III, IV and V in Embodiment 3 and will not be repeated here.

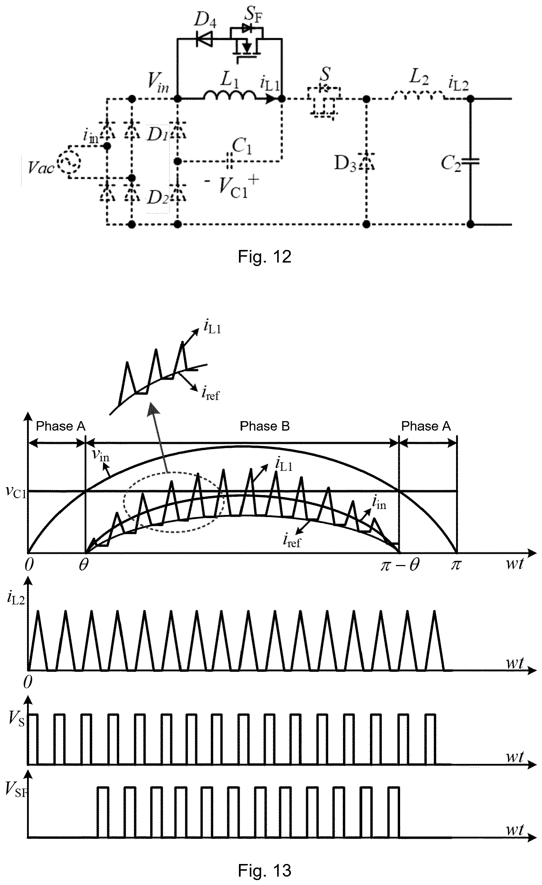

Mode VII: As shown in Fig. 12, when the main switch S is turned off and the freewheeling switch SF is turned on, the first inductor L1 enters a freewheeling state. The current $i_{L1}$ of the first inductor L1 remains unchanged, the current $i_{L2}$ of the second inductor L2 drops to zero, and the capacitor C2 supplies power to the load.

The switching control logic and method of this embodiment are the same as those of Embodiment 3 and will not be repeated here.

Fig. 13 shows a waveform diagram of various main nodes in the power supply method of this embodiment. It can be seen that the first inductor L1 operates in the PCCM mode and the second inductor L2 operates in the DCM mode.

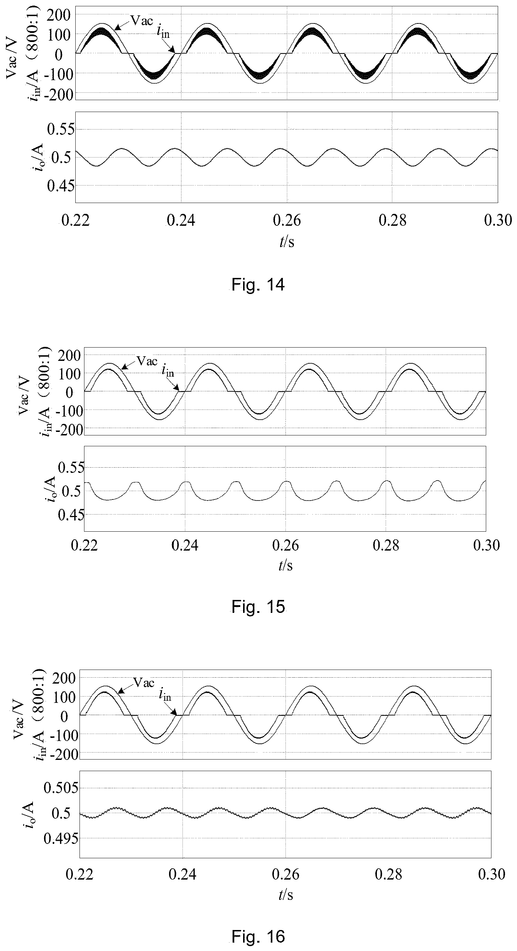

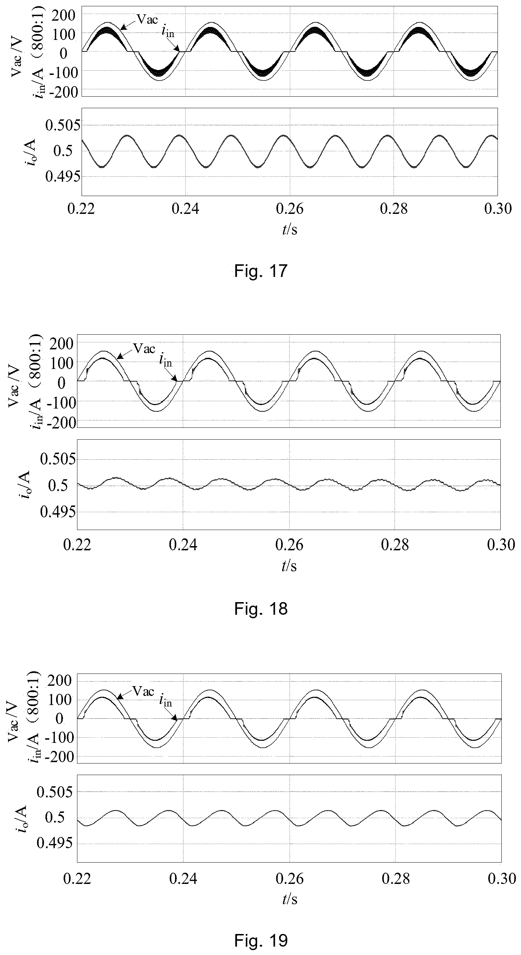

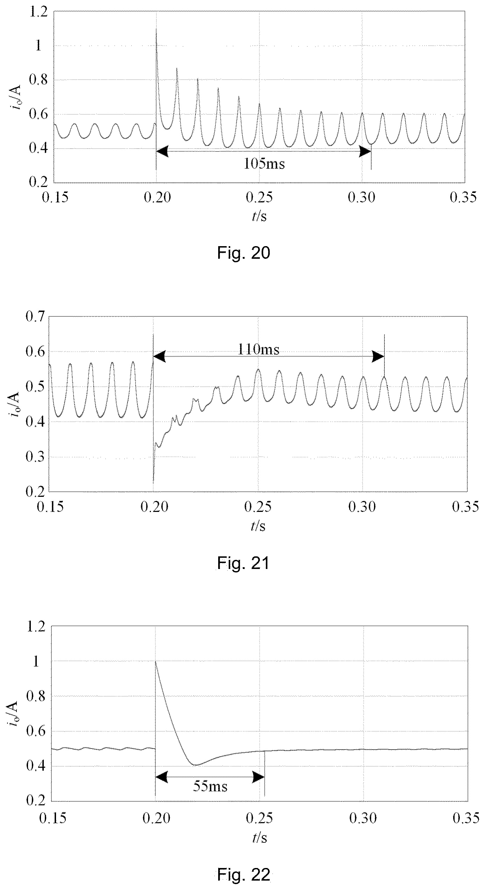

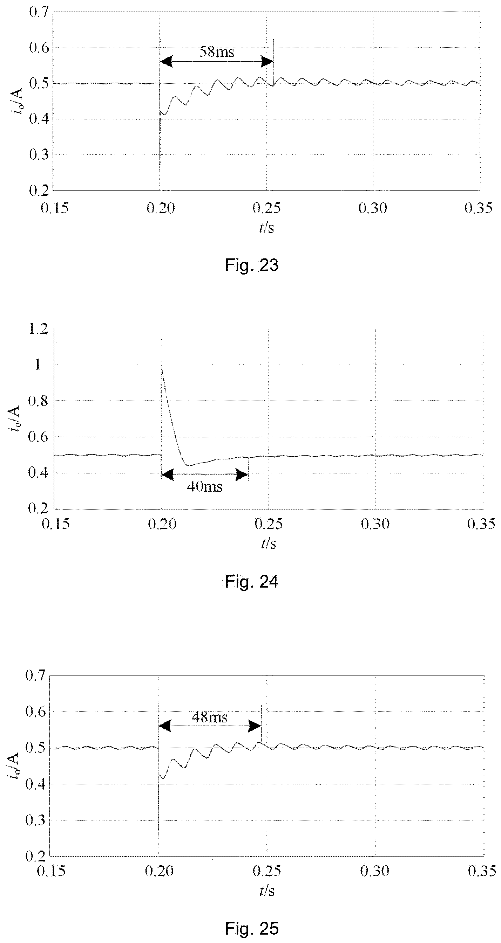

As shown in Figs. 14-19, the present disclosure has built six PFC converter simulation models based on PSIM simulation software for CCM/DCM-CCM/DCM quadratic Buck PFC converter and PCCM-CCM/DCM quadratic Buck PFC converter of the present disclosure. The AC voltage $V_{ac}$, input current $i_{in}$ and output current $i_o$ waveform diagrams are obtained; among them, Fig. 14 is a waveform diagram corresponding to CCM-CCM working mode; Fig. 15 is a waveform diagram corresponding to CCM-DCM working mode; Fig. 16 is a waveform diagram corresponding to DCM-CCM working mode; Fig. 17 is a waveform diagram corresponding to DCM-DCM working mode; Fig. 18 is a waveform diagram corresponding to PCCM-CCM working mode of the present disclosure; Fig. 19 is a waveform diagram corresponding to PCCM-DCM working mode of the present disclosure; from the above figures, it can be seen that the present disclosure has smaller output ripple. As shown in Figs. 20 to 25, three power supply circuits, that is, CCM-DCM, DCM-DCM and PCCM-DCM power supply circuits were selected to verify and analyze their load dynamic performance; among them, Fig. 20 shows the response time when the load power jumps from 20W to 10W under CCM-DCM working mode; Fig. 21 shows the response time when the load power jumps from 10W to 20W under CCM-DCM working mode; Fig. 22 shows the response time when the load power jumps from 20W to 10W under DCM-DCM working mode; Fig. 23 shows the response time when the load power jumps from 10W to 20W under DCM-DCM working mode of the present disclosure; Fig. 22 shows the response time when the load power jumps from 20W to 10W under PCCM-DCM working mode; Fig. 23 shows the response time when the load power jumps from 10W to 20W under PCCM-DCM working mode of the present disclosure. From the above figures, it can be seen that the present disclosure has a faster load dynamic response speed.

In summary, the present disclosure provides a power supply circuit, including: a rectifier module, a first diode, a second diode, a first inductor, a first capacitor, a freewheeling module, a main switch, a third diode, a second inductor and a second capacitor. The rectifier module receives an AC voltage and rectifies the AC voltage to obtain a DC input voltage. The cathode of the first diode is connected to the non-inverting output end of the rectifier module, and the anode of the first diode is connected to the cathode of the second diode. The anode of the second diode is connected to the inverting output end of the rectifier module. A first end of the first inductor is connected to the cathode of the first diode, and a second end of the first inductor is connected to a first end of the main switch. An input end of the freewheeling module is connected to the second end of the first inductor, and an output end of the freewheeling module is connected to the first end of the first inductor. A lower electrode plate of the first capacitor is connected to the anode of the first diode, and an upper electrode plate of the first capacitor is connected to the second end of the first inductor; a first end of the second inductor is connected to a second end of the main switch, and a second end of the second inductor is connected to the inverting output end of the rectifier module via the second capacitor; the cathode of the third diode is connected to the first end of the second inductor, and the anode of the third diode is connected to the inverting output end of the rectifier module. The LED driving power supply, the power supply circuit and the power supply method of the present disclosure have two switches in the converter: a main switch and a freewheeling switch, that is, there are two control degrees of freedom, which makes it easier to optimize control parameter design; the present disclosure has a faster load dynamic response speed and smaller output current ripple. Therefore, the present disclosure effectively overcomes various disadvantages of the traditional technology and has high industrial values.

The above-mentioned embodiments are just used for exemplarily describing the principle and effects of the present disclosure instead of limiting the present disclosure. Those skilled in the art can make modifications or changes to the above-mentioned embodiments without going against the spirit and the range of the present disclosure. Therefore, all equivalent modifications or changes made by those who have common knowledge in the art without departing from the spirit and technical concept disclosed by the present disclosure shall be still covered by the claims of the present disclosure.

**Claims**

1. A power supply circuit, comprising:

a rectifier module, a first diode, a second diode, a first inductor, a first capacitor, a freewheeling module, a main switch, a third diode, a second inductor, and a second capacitor; wherein the rectifier module is configured to receive an AC voltage and rectify the AC voltage to obtain a DC input voltage;
a cathode of the first diode is connected to a non-inverting output end of the rectifier module, and an anode of the first diode is connected to a cathode of the second diode;
an anode of the second diode is connected to an inverting output end of the rectifier module;
a first end of the first inductor is connected to the cathode of the first diode, and a second end of the first inductor is connected to a first end of the main switch;
an input end of the freewheeling module is connected to the second end of the first inductor, and an output end of the freewheeling module is connected to the first end of the first inductor;
a lower electrode plate of the first capacitor is connected to the anode of the first diode, and an upper electrode plate of the first capacitor is connected to the second end of the first inductor;
a first end of the second inductor is connected to a second end of the main switch, and a second end of the second inductor is connected to the inverting output end of the rectifier module via the second capacitor; and
a cathode of the third diode is connected to the first end of the second inductor, and an anode of the third diode is connected to the inverting output end of the rectifier module.

2. The power supply circuit according to claim 1, wherein the freewheeling module comprises a freewheeling switch and a fourth diode, wherein the freewheeling switch is connected in series with the fourth diode.

3. The power supply circuit according to claim 1, wherein the rectifier module is a bridge-type uncontrolled rectification filtering circuit, and comprises two diode groups connected in parallel, wherein each of the two diode groups comprises two diodes connected in series, wherein the AC voltage is connected between the two diodes of each of the two diode groups; wherein the DC input voltage provided by the rectifier module is an absolute value of a sinusoidal voltage signal.

4. The power supply circuit according to claim 1, further comprising a main switch control module, wherein the main switch control module includes an operational amplifier and a first comparator; wherein the operational amplifier is configured to amplify and output a difference between an output current of the power supply circuit and a first reference current, and the first comparator is configured to compare an output signal of the operational amplifier with a carrier signal and generate a main switch control signal; wherein an inverting input end of the operational amplifier is configured to receive the output current of the power supply circuit, a non-inverting input end of the operational amplifier is configured to receive the first reference current, a non-inverting input end of the first comparator is connected to an output end of the operational amplifier, and an inverting input end of the first comparator is configured to receive the carrier signal; or wherein the non-inverting input end of the operational amplifier is configured to receive the output current of the power supply circuit, the inverting input end of the operational amplifier is configured to receive the first reference current, the inverting input end of the first comparator is connected to the output end of the operational amplifier, and the non-inverting input end of the first comparator is configured to receive the carrier signal.

5. The power supply circuit according to any one of claim 4, further comprising a freewheeling switch control module, wherein the freewheeling switch control module includes a second comparator and an RS flip-flop; wherein an inverting input end of the second comparator is configured to receive a current of the first inductor, and a non-inverting input end of the second comparator is configured to receive a second reference current, wherein the current of the first inductor is compared with the second reference current and a comparison result is output; wherein a set end of the RS flip-flop is connected to an output end of the second comparator, and a reset end of the RS flip-flop is connected to a control signal of the main switch to output a freewheeling switch control signal.

6. The power supply circuit according to claim 5, wherein the second reference current is a sine wave in phase with the AC voltage.

7.  An LED driving power supply, comprising at least: an LED load and the power supply circuit according to any one of claims 1-6, wherein the LED load is connected in parallel across the second capacitor.

8.  A power supply method for the power supply circuit according to any one of claims 1-6, comprising at least:

    when an input voltage is less than or equal to a voltage across the first capacitor, turning on the main switch and turning off the freewheeling switch,
    wherein the first capacitor supplies power to the second inductor and a load;
    or turning off the main switch and the freewheeling switch, wherein the second inductor supplies power to the load;
    when the input voltage is greater than the voltage across the first capacitor, turning on the main switch and turning off the freewheeling switch, wherein the input voltage and the first capacitor supply power to the second inductor and the load; or turning off the main switch and the freewheeling switch,
    wherein the first inductor supplies power to the first capacitor, and the second inductor supplies power to the load; or turning off the main switch and turning on the freewheeling switch, wherein the first inductor enters a freewheeling state, and the second inductor supplies power to the load.

9.  The power supply method for the power supply circuit according to claim 8, wherein the first inductor operates in a pseudo continuous conduction mode (PCCM), and the second inductor operates in a continuous conduction mode (CCM).

10. A power supply method for the power supply circuit according to any one of claims 1-6, comprising at least:

    when an input voltage is less than or equal to a voltage across the first capacitor, turning on the main switch and turning off the freewheeling switch,
    wherein the first capacitor supplies power to the second inductor and the load; or turning off the main switch and the freewheeling switch, wherein a current on the second inductor decreases and the second inductor supplies power to the load; or turning off the main switch and the freewheeling switch, wherein the current on the second inductor is zero, and the second capacitor supplies power to the load;
    when the input voltage is greater than the voltage across the first capacitor, turning on the main switch and turning off the freewheeling switch, wherein the input voltage and the first capacitor supply power to the second inductor and the load; or turning off the main switch and the freewheeling switch,
    wherein the first inductor charges the first capacitor, and the second inductor supplies power to the load; or turn offing the main switch and turning on the freewheeling switch, wherein the first inductor enters a freewheeling state, the current on the second inductor decreases, and the second inductor supplies power to the load; or turning off the main switch and turning on the freewheeling switch, wherein the first inductor enters a freewheeling state, the current on the second inductor is zero, and the second capacitor supplies power to the load.

11. The power supply method for the power supply circuit according to claim 10, wherein the first inductor operates in a pseudo continuous conduction mode (PCMM) and the second inductor operates in a discontinuous conduction mode (DCM).

12. The power supply method for the power supply circuit according to any one of claims 8-11, wherein when a value of a first reference current minus an output current of the power supply circuit is greater than a value of a carrier signal, turning on the main switch; when the value of the first reference current minus the output current of the power supply circuit is less than the value of the carrier signal, turning off the main switch.

13. The power supply method for the power supply circuit according to claim 12, wherein the carrier signal is a sawtooth wave.

14. The power supply method for the power supply circuit according to claim 12, wherein when a current of the first inductor is less than a second reference current and the main switch is in an off state, turning on the freewheeling switch.

15. The power supply method for the power supply circuit according to claim 14, wherein the second reference current is a sine wave in phase with an AC voltage.

Fig. 1

Fig. 2

Fig. 3

Fig. 4

Fig. 5

Fig. 6

Fig. 7

Fig. 8

Fig. 9

13

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

## INTERNATIONAL SEARCH REPORT

| | International application No. |
|---|---|
| | **PCT/CN2022/081954** |

**A. CLASSIFICATION OF SUBJECT MATTER**

H02M 1/42(2007.01)i; H02M 3/155(2006.01)i

According to International Patent Classification (IPC) or to both national classification and IPC

**B. FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNTXT; CNABS; DWPI; WPABS; ENTXTC; ENTXT; CNKI; IEEE: 二次, 降压, 功率因数校正, 续流, 纹波, 频闪, 动态响应, 伪连续导通, 二极管, 电感, 电容, 开关, LED, quadratic buck, PFC, freewheel+, ripple, strobe, dynamic response, PCCM, diode, induct+, capacit+, switch+

**C. DOCUMENTS CONSIDERED TO BE RELEVANT**

| Category* | Citation of document, with indication, where appropriate, of the relevant passages | Relevant to claim No. |
|---|---|---|
| PX | 刘晁瑞 (LIU, Chaorui). "三态二次型Buck PFC变换器研究 (Research on Tri-state Quadratic Buck PFC Converter)" <br> 中国优秀博硕士学位论文全文数据库(硕士) (*Chinese Doctoral Dissertations & Master's Theses Full-text Database (Master)*), 15 July 2021 (2021-07-15), <br> ISSN: 1674-0246, <br> pp. 25-56 | 1-15 |
| Y | CN 110768527 A (HARBIN UNIVERSITY OF SCIENCE AND TECHNOLOGY) 07 February 2020 (2020-02-07) <br> description, paragraphs 0013-0022, and figures 1-3 | 1-7 |
| Y | CN 108768192 A (CHONGQING UNIVERSITY) 06 November 2018 (2018-11-06) <br> description, paragraphs 0044-0080, and figures 1-5 | 1-7 |
| Y | CN 104753335 A (SOUTHWEST JIAOTONG UNIVERSITY) 01 July 2015 (2015-07-01) <br> description, paragraphs 0015-0020, and figures 1-5 | 1-7 |
| Y | CN 112366936 A (SICHUAN UNIVERSITY) 12 February 2021 (2021-02-12) <br> description, paragraphs 0049-0093, and figures 1-14 | 1-7 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2022** | **02 June 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/081954**

**C.    DOCUMENTS CONSIDERED TO BE RELEVANT**

| Category* | Citation of document, with indication, where appropriate, of the relevant passages | Relevant to claim No. |
|---|---|---|
| Y | GAO, Xiaoqian. "A Study of Three-phase APFC Based on Quadratic Buck Converter" *IEEE PES Innovative Smart Grid Technologies,* 17 September 2012 (2012-09-17), pp. 1-3 | 1-7 |
| A | CN 103647448 A (HANGZHOU SILAN MICROELECTRONICS CO., LTD.) 19 March 2014 (2014-03-19) entire document | 1-15 |

Form PCT/ISA/210 (second sheet) (January 2015)

INTERNATIONAL SEARCH REPORT
Information on patent family members

International application No.

**PCT/CN2022/081954**

| Patent document cited in search report | | | Publication date (day/month/year) | Patent family member(s) | | | Publication date (day/month/year) |
|---|---|---|---|---|---|---|---|
| CN | 110768527 | A | 07 February 2020 | None | | | |
| CN | 108768192 | A | 06 November 2018 | None | | | |
| CN | 104753335 | A | 01 July 2015 | None | | | |
| CN | 112366936 | A | 12 February 2021 | None | | | |
| CN | 103647448 | A | 19 March 2014 | CN | 103647448 | B | 06 January 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110645429